(19) **Europäisches Patentamt**
**European Patent Office**
**Office européen des brevets**

(11) **EP 2 664 466 B1**

(12) **EUROPÄISCHE PATENTSCHRIFT**

(45) Veröffentlichungstag und Bekanntmachung des Hinweises auf die Patenterteilung:
**29.06.2016 Patentblatt 2016/26**

(51) Int Cl.:
***B60C 23/00*** *(2006.01)*

(21) Anmeldenummer: **13156066.6**

(22) Anmeldetag: **21.02.2013**

(54) **Verfahren zum Erfassen und Anpassen des Drucks in einem Luftreifen**

Method for detecting and adjusting the pressure in a pneumatic tyre

Procédé de pistage et d'ajustement de la pression dans un pneumatique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.05.2012 DE 102012009523**

(43) Veröffentlichungstag der Anmeldung:
**20.11.2013 Patentblatt 2013/47**

(73) Patentinhaber: **CLAAS Selbstfahrende Erntemaschinen GmbH**
**33428 Harsewinkel (DE)**

(72) Erfinder:
• **Fuhrmann, Carsten**
**33604 Bielefeld (DE)**
• **Wagemann, Sebstatian**
**59302 Oelde (DE)**
• **Krauß, Andreas**
**39613 Schwalmstadt (DE)**
• **Hansen, Thomas**
**33142 Büren (DE)**

(56) Entgegenhaltungen:
**EP-A1- 1 435 302     EP-A2- 0 365 953**

EP 2 664 466 B1

## Beschreibung

Die vorliegende Erfindung betrifft ein Verfahren zum Erfassen des Drucks in einem Luftreifen, insbesondere einem Luftreifen eines landwirtschaftlichen Fahrzeugs, und zum Anpassen des Reifendrucks an die Einsatzbedingungen des Fahrzeugs.

Der ideale Reifendruck variiert bei landwirtschaftlichen Fahrzeugen stark in Abhängigkeit von den Einsatzbedingungen. Während bei Straßenfahrt ein hoher Reifendruck die Rollreibung und die am Reifen geleistete Walkarbeit gering hält und so eine energieeffiziente und Material schonende Fortbewegung ermöglicht, ist beim Feldeinsatz ein deutlich niedrigerer Reifendruck wünschenswert, um das Gewicht des Fahrzeugs auf eine große Aufstandsfläche zu verteilen und dadurch die Bodenverdichtung zu minimieren bzw. um ein Anschmiegen des Reifenprofils an den Untergrund und dadurch eine effiziente Übertragung der Antriebskraft zu ermöglichen. Eine Druckanpassung der Reifen beim Wechsel zwischen Straßenfahrt und Feldeinsatz ist jedoch nur dann mit vertretbarem Zeitaufwand machbar, wenn die Druckanpassung automatisch, ohne Benutzereingriff, stattfinden und aus einem am Fahrzeug mitgeführten Hochdruckreservoir gespeist werden kann.

Aus DE 10 2009 051 403 A1 ist ein Reifendrucküberwachungssystem für ein Fahrzeug bekannt, bei dem alle Reifen des Fahrzeugs an eine gemeinsame Verteilerleitung angeschlossen sind. Die Verteilerleitung ist mit einem Druckspeicher über ein Steuerventil und über eine Drossel verbunden. Mit Hilfe von beiderseits der Drossel angeordneten Druckfühlern kann die Richtung eines Luftstroms über die Drossel erfasst werden. Wenn der Luftstrom zum Erliegen kommt, dann ist der Druck in dem Reifen an den des Druckspeichers angeglichen, und die Reifenventile sowie das Steuerventil können geschlossen werden, so dass die Verteilerleitung bis zur nächsten Reifendruckanpassung drucklos bleiben kann. Das herkömmliche System ermöglicht jedoch nur eine Angleichung des Drucks im Reifen an den im Druckspeicher. Das Einstellen eines vom Druck im Druckspeicher abweichenden Reifendrucks oder gar von unterschiedlichen Reifendrücken in unterschiedlichen Reifen ist nicht möglich. Dies ist jedoch gerade bei landwirtschaftlichen Fahrzeugen wie etwa Traktoren, Mähdreschern oder dergleichen störend, die an Vorder- und Hinterachse unterschiedlich große und oft bei unterschiedlichen Drücken zu betreibende Reifen aufweisen.

Eine quantitative Messung des Reifendrucks ist mit dem oben beschriebenen herkömmlichen System nicht möglich, es kann lediglich festgestellt werden, ob der Reifendruck signifikant von dem des Druckspeichers abweicht.

Es wäre zwar grundsätzlich denkbar, an der Verteilerleitung einen Drucksensor vorzusehen, um mit ihm den Druck in einem angeschlossenen Reifen zu messen, doch würde eine solche Messung, wenn sie im Rahmen einer Druckanpassung stattfindet, jedes mal eine Unterbrechung des Luftflusses auf der Verteilerleitung erfordern und dadurch den Druckanpassungsvorgang erheblich verlängern. Des Weiteren besteht die Möglichkeit einer Verfälschung der Messergebnisse, wenn für die Druckmessung die Verteilerleitung erst mit Druckluft aus dem zu messenden Reifen geflutet werden muss.

Weiter ist aus der EP 0 365 953 A2 eine Reifendruckregeleinrichtung bekannt geworden, die eine geräuscharme Druckänderung im Fahrzeugreifen dadurch ermöglicht, dass der Reifen mit einem Druckspeicher zusammenarbeitet, aus dem Druckluft in den Reifen oder in den Druckluft aus dem Reifen gefördert werden kann.

Schließlich sei noch die EP 0 365 953 A2 erwähnt, die in Analogie zu DE 10 2009 051 403 A1 eine Reifendruckregelanlage offenbart, die den Reifendruck sensorisch überwacht und anpasst, wobei der Ventilkreislauf so beschaffen ist, dass der Betreiber den gewünschten Reifendruck bedienerfreundlich von der Fahrerkabine aus anpassen kann.

Ein wesentlicher Nachteil derartiger Reifendruckregelsysteme ist, dass der Aufbau des geforderten Reifendrucks zunächst abgewartet und sodann gemessen und visualisiert werden muss. Dies hat den Nachteil, dass so beschaffene Reifendruckregelanlagen träge sind.

Aufgabe der Erfindung ist, ein Verfahren zum Erfassen des Drucks in einem Luftreifen zu schaffen, das während eines Druckanpassungsvorgangs ohne Zeitverlust ausführbar ist.

Die Aufgabe wird gelöst durch ein Verfahren zum Erfassen des Drucks in einem Luftreifen mit den Schritten:

    a) Fließenlassen von Luft auf einer Leitung, die den Luftreifen mit einem Luftreservoir verbindet,
    b) Messen eines - im Folgenden als reifenseitig bezeichneten - Luftdrucks an einem reifenseitigen Messpunkt der Leitung, der vom Reservoir und vom Reifen jeweils durch einen Strömungswiderstand getrennt ist, und
    c) Abschätzen des Reifendrucks anhand einer Eichfunktion, die den reifenseitigen Luftdruck und einen reservoirseitigen Luftdruck als Variablen hat.

Parameter der Eichfunktion hängen mit der Geometrie der Leitung und den an ihr auftretenden Strömungswiderständen zusammen und sollten daher vorab empirisch ermittelt werden. Dies stellt jedoch insbesondere dann, wenn die Leitung in einem Fahrzeug eingebaut und wiederholt zur Erfassung des Drucks der Reifen des Fahrzeugs verwendet wird, keine schwerwiegende Einschränkung dar.

Gute Ergebnisse wurden mit einer Eichfunktion erzielt, die geschrieben werden kann als Summe des reifenseitigen oder des reservoirseitigen Luftdrucks und eines von der Differenz zwischen reifenseitigem und reservoirseitigem Luftdruck abhängigen Korrekturterms. Dabei ist es für das Ergebnis des Verfahrens selbstverständlich ohne Belang, ob bei seiner Ausführung Werte der Eichfunktion anhand dieser Darstellung in Echtzeit berechnet oder in einer vorab berechneten Wertetabelle nachgeschlagen werden.

Der reservoirseitige Druck kann fest und vorbekannt sein; insbesondere wenn das Reservoir die Umgebungsluft ist, kann sein Druck als bekannt und konstant angenommen werden. Auch bei einem unter Überdruck stehenden Reservoir kann der Druck bauartbedingt fest vorgegeben sein, so dass keine Messung notwendig ist. Um eine präzise Druckdifferenzmessung zu ermöglichen, kann es jedoch sinnvoll sein, wenn der reservoirseitige Druck nicht unmittelbar am Reservoir, sondern an einem zweiten Messpunkt gemessen wird, und dass beide Messpunkte eng benachbart beiderseits einer Drosselstelle der Leitung angeordnet sind.

Empirische Bestimmungen der Eichfunktion an unterschiedlichen Leitungsgeometrien haben gezeigt, dass in den meisten praktischen Fällen die Druckdifferenz mit einem Exponenten < 1 in den Korrekturterm eingehen sollte. Gute Ergebnisse werden insbesondere mit einem Wert des Exponenten von unter 0,9, insbesondere unter 0,8, und über 0,5 erzielt.

Es wurden jedoch auch Leitungsgeometrien gefunden, für die sich die beste Übereinstimmung zwischen mit der Eichfunktion berechneten Druckwerten und realen Reifendrücken bei einem Wert des Exponenten von über 1, insbesondere von wenigstens 1,1 ergab.

Gegenstand der Erfindung ist auch ein Verfahren zur Reifendruckanpassung mit den Schritten:

A) Erfassen des Drucks in einem Reifen mit dem oben beschriebenen Verfahren, und
B) Schließen der den Reifen mit dem Druckreservoir verbindenden Leitung, wenn der auf diese Weise erfasste Druck mit einem Zieldruck übereinstimmt.

Anders als beim eingangs zitierten Stand der Technik kann dieser Zieldruck vom Druck des Druckreservoirs verschieden sein. Effektiv kann also mit dem Verfahren ausgehend von einem gegebenen Anfangsdruck des Reifens ein beliebiger Druck zwischen dem Anfangsdruck und dem Druck des Reservoirs eingestellt werden. Wenn als Reservoir wahlweise ein Hochdruckreservoir als auch die Umgebung eingesetzt werden können, kann folglich in dem Reifen jeder beliebige Druck zwischen dem Druck des Hochdruckreservoirs und dem Umgebungsdruck eingestellt werden.

Das Einstellen des Drucks nimmt nur kurze Zeit in Anspruch, da ein Luftfluss auf der Leitung, durch den sich der Druck des Reifens dem Zieldruck nähert, für die Erfassung des Reifendrucks nicht unterbrochen werden muss, sondern, im Gegenteil, Vorraussetzung für die Druckerfassung ist.

Diese Flexibilität prädestiniert das erfindungsgemäße Verfahren für den Einsatz an einem Fahrzeug, bei dem die Zieldrücke für erste und zweite Reifen unterschiedlich sind.

Weitere Merkmale und Vorteile der Erfindung ergeben sich aus der nachfolgenden Beschreibung von Ausführungsbeispielen unter Bezugnahme auf die beigefügten Figuren. Es zeigen:

Fig. 1 eine schematische Darstellung eines landwirtschaftlichen Fahrzeugs, das zur Durchführung des erfindungsgemäßen Verfahrens eingerichtet ist; und

Fig. 2 eine typische Entwicklung des wahren Reifendrucks, des reifenseitigen und des reservoirseitigen Luftdrucks sowie eines aus diesen beiden Drücken gemäß dem erfindungsgemäßen Verfahren berechneten Reifendrucks während des Abfließens von Luft aus einem Reifen des Fahrzeugs der Fig. 1.

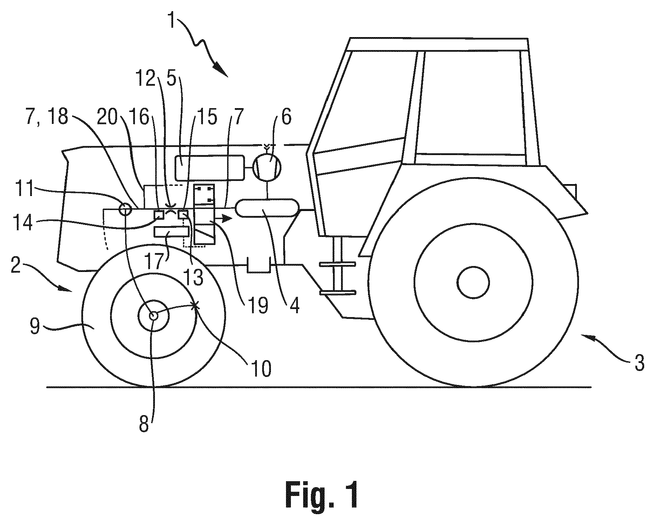

Fig. 1 zeigt als Beispiel für ein landwirtschaftliches Fahrzeug, an dem das erfindungsgemäße Verfahren anwendbar ist, einen Traktor 1, bei dem Vorderräder 2 deutlich kleiner sind als Hinterräder 3 und deshalb oft einen höheren Druck benötigen. Als ein weiteres bevorzugtes Anwendungsbeispiel könnte ein Mähdrescher dienen, bei dem die Größen- und Druckverhältnisse von Vorder- und Hinterrädern im Allgemeinen entgegengesetzt sind.

An Bord des Traktors 1 befindet sich ein Hochdruckreservoir 4, das im hier dargestellten Fall mit einem von einem Dieselmotor 5 des Traktors 1 angetriebenen Kompressor 6 verbunden ist, um das Hochdruckreservoir 4 nach jedem Abfluss von Druckluft wieder auf einen vorgegebenen Nenndruck zu bringen.

Eine Druckluftleitung 7 erstreckt sich von dem Reservoir 4 über Drehdurchführungen 8 am linken und rechten Vorderrad 2 zu einem Sitzventil 10 an einer Luftkammer des linken bzw. rechten Vorderradreifens 9. Eine Stelle 11 der Druckluftleitung 7, an der sich diese in zwei zum rechten bzw. linken Vorderrad 2 führende Zweige gabelt, kann als ein einfaches T-Stück oder als ein Wegeventil ausgebildet sein, welches das Reservoir 4 wahlweise mit dem rechten oder dem linken Vorderradreifen 9 verbindet.

Das Sitzventil 10 ist aus einer normalerweise geschlossenen Stellung in eine offene Stellung umschaltbar, z.B. durch ein elektrisches Steuersignal oder durch einen auf der Leitung 7 anstehenden Überdruck. In letzterem Fall genügt es, die Leitung 7 mit Druckgas aus dem Hochdruckreservoir 4 zu beaufschlagen, um eine Verbindung zwischen den Vorderradreifen 9 und dem Hochdruckreservoir 4 herzustellen, über die Luft in die Vorderradreifen 9 zuströmt.

Die Druckluftleitung 7 weist eine Drosselstelle 12 auf, an der der Luftfluss vom Reservoir 4 zum Reifen 9 einen Druckabfall bewirkt. Um diesen Druckabfall zu erfassen, sind zwei Drucksensoren 13, 14 an einem reservoirseitigen Messpunkt 15 bzw. einem reifenseitigen Messpunkt 16 beiderseits der Drosselstelle 12 angeschlossen. Eine mit den Sensoren 13, 14 verbundene elektronische Steuereinheit 17 kann eingerichtet sein, um rechnerisch die Differenz zwischen den Drücken $p_{15}$, $p_{16}$ an den Messpunkten 15, 16 zu ermitteln, vorzugsweise ist jedoch einer der beiden Sensoren, insbesondere der reservoirseitige Sensor 13, als ein mit beiden Messpunkten 15, 16 verbundener Differenzsensor ausgebildet, so dass die Steuereinheit 17 von diesem Sensor unmittelbar ein für die Druckdifferenz zwischen den Messpunkten 15, 16 repräsentatives Signal empfängt.

Solange Luft in der Leitung 7 fließt, weicht der wahre Druck in dem Vorderradreifen 9 von dem Druck am reifenseitigen Messpunkt 16 ab, da ein sich zwischen dem Messpunkt 16 und dem Reifen 9 erstreckender Abschnitt 17 der Leitung 7 ebenfalls einen nicht zu vernachlässigenden Strömungswiderstand aufweist, zu dem unter anderem die Drehdurchführungen 8 und die Sitzventile 10 der Reifen 9 beitragen. Überraschenderweise wurde festgestellt, dass dieser Druckabfall im Allgemein nicht genau proportional zum Druckabfall $p_{15}$-$p_{16}$ an der Drosselstelle 12 ist, sondern dass der wahre Druck $p_{rad}$ im Reifen 9 als Funktion der Drücke $p_{15}$, $p_{16}$ an den Messpunkten 15, 16 mit guter Genauigkeit wiedergegeben werden kann durch den Ausdruck:

$$p_{rad} = p_{16} - y(p_{15}-p_{16})^z,$$

wobei z im Allgemeinen für eine gegebene Leitungsgeometrie empirisch ermittelt werden muss und signifikant von 1 abweicht. Der Faktor y ist ebenfalls eine im Einzelfall für eine gegebene Leitungsgeometrie empirisch zu ermittelnde Größe, für deren numerischen Wert allerdings keine Richtwerte angegeben werden können, da diese unter anderem von der für die Drücke verwendeten Maßeinheit abhängen.

Der von 1 verschiedene Exponent z ist möglicherweise auf unterschiedliches Turbulenzverhalten der Drosselstelle 12 einerseits und des sich zwischen dem Messpunkt 16 und den Reifen 9 erstreckenden Abschnitt 18 der Leitung 7 zurückzuführen: das Einsetzen von Turbulenz führt zu einem erhöhten Druckabfall, und wenn die Neigung zur Turbulenz an der Drosselstelle 12 stärker ist als auf dem zwischen ihr und dem Reifen 9 liegenden Leitungsabschnitt, dann wächst mit zunehmender Druckdifferenz auf der Leitung 7 das Druckgefälle an der Drosselstelle 12 schneller als auf dem Abschnitt 18, mit der Folge, dass z einen Wert unter 1 annimmt. Ist hingegen die Drosselstelle 12 weit und ihre Neigung zur Turbulenz gering, dann kann der Druckabfall auf dem Abschnitt 18 schneller zunehmen als an der Drosselstelle 12, so dass sich ein Exponent z > 1 ergibt. Für eine genaue Berechnung des Reifendrucks ist es von Vorteil, wenn die Druckdifferenz $p_{16}$-$p_{15}$ groß genug ist, um mit einem geringen prozentualen Fehler gemessen werden zu können, der Beitrag des Korrekturterms $y(p_{15}-p_{16})^z$ jedoch kleiner ist als die Druckdifferenz $p_{15}$-$p_{16}$. Da dies einen stärkeren Druckabfall an der Drosselstelle 12 als auf dem Leitungsabschnitt 18 erfordert, muss die Drosselstelle 12 eng und ihre Neigung zur Turbulenzbildung dementsprechend hoch sein, mit der Folge, dass der Reifendruck bei einer Leitungsgeometrie, die einen Exponenten z<1 ergibt, genauer berechenbar ist als im Falle eines Exponenten z>1.

Während die Luft durch die Leitung 7 fließt, kann die Steuereinheit 17 jederzeit die Drücke $p_{15}$, $p_{16}$ (oder $p_{16}$ und die Druckdifferenz $p_{15}$ - $p_{16}$) erfassen und daraus den Reifendruck $p_{rad}$ berechnen. Sobald dieser einen Zielwert erreicht hat, schließt die Steuereinheit das Sitzventil 10, und der Reifen 9 hält den eingestellten Druck $p_{rad}$.

Alternativ kann auch zunächst die Leitung 7 offen gehalten werden, bis der Druck in den Reifen 9 an dem im Reservoir 4 angeglichen ist. Anschließend wird durch Umschalten eines an der Druckluftleitung 7 zwischen dem Reservoir 4 und dem Messpunkt 15 angeordneten Wegeventils 19 der reservoirseitige Messpunkt 15 mit der Umgebung verbunden. Daraufhin kehrt sich die Flussrichtung der Luft in der Leitung 7 um, in diesem Fall berechnet die Steuereinheit 17 den Druck der Reifen $p_{rad}$ mit der Formel

$$p_{rad} = p_{16} + w(p_{16} - p_{15})^x.$$

Da der Strömungswiderstand der Leitung 7 richtungsabhängig sein kann, haben in der Praxis die Parameter w und y bzw. x und z für eine gleiche Leitung 7 zwar ähnliche, aber nicht identische Werte. Auch hier errechnet die Steuereinheit 17 während des Abfließens der Luft aus dem Reifen 9 fortlaufend den Reifendruck $p_{rad}$ nach der oben angegebenen Formel und das schließt das Sitzventil 10, sobald der gewünschte Reifendruck erreicht ist.

Selbstverständlich ist das hier für die Vorderräder beschriebene Verfahren für die Reifen der Hinterräder 3 in gleicher Weise durchführbar. Eine vom Hockdruckreservoir 4 zu den Hinterradreifen verlaufende Leitung kann, völlig getrennt von der Druckluftleitung 7, eine eigene Drosselstelle und Drucksensoren aufweisen; dies bietet die Möglichkeit, eine Druckanpassung an Vorder- und Hinterrädern gleichzeitig in kürzester Zeit durchzuführen. Einer kostengünstigeren Variante zufolge kann, wie in Fig. 1 angedeutet, lediglich der Leitungsabschnitt 18 durch einen zu den Hinterrädern führenden Abschnitt 20 verdoppelt sein; in diesem Fall können die Drucksensoren 13, 14 und die Steuereinheit 17 nacheinander zum Anpassen der Drücke von Vorder- und Hinterrädern eingesetzt werden.

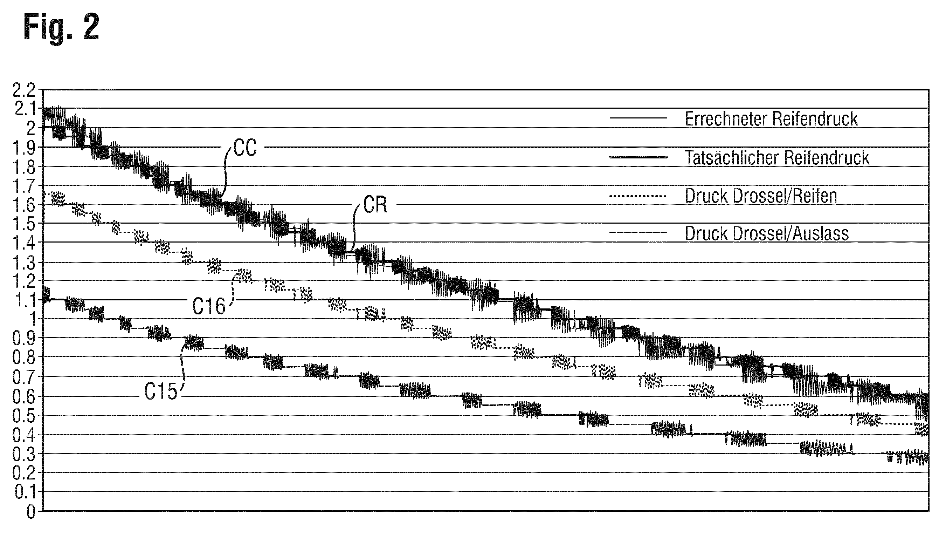

Fig. 2 zeigt das Ergebnis einer Druckmessung, die an dem in Fig. 1 gezeigten System während des Ablassens von Luft aus den Reifen durchgeführt wurde:

Kurven C15, C16, CR repräsentieren jeweils gemessene Drücke an den Messpunkten 15, 16 bzw. im Reifen 9, eine Kurve CC repräsentiert den nach dem erfindungsgemäßen Verfahren berechneten Reifendruck. Der anfängliche Überdruck der Reifen 9 betrug 2 bar, und der Druck wurde abgelassen bis auf einen Endwert von 0,7 bar. Für praktische Anforderungen können die Kurven CR, CC als identisch betrachtet werden. Der Druckabfall an der Drosselstelle 12, entsprechend der Differenz zwischen den Kurven C15, C16, ist größer als der Druckabfall auf dem Leitungsabschnitt 18, repräsentiert durch den Unterschied zwischen den Kurven CR, C16. Der Exponent x ist kleiner als 1.

**Patentansprüche**

1. Verfahren zum Erfassen des Drucks in einem Luftreifen, mit den Schritten:

   a) Fließenlassen von Luft auf einer Leitung (7), die den Luftreifen (9) mit einem Druckreservoir (4) verbindet,
   b) Messen eines reifenseitigen Luftdrucks ($p_{16}$) an einem reifenseitigen Messpunkt (16) der Leitung (7), der vom Reservoir (4) und vom Reifen (9) jeweils durch einen Strömungswiderstand getrennt ist,
   **dadurch gekennzeichnet, dass** der weitere Verfahrensschritt
   c) Abschätzen des Reifendrucks ($p_{rad}$) anhand einer Eichfunktion, die den reifenseitigen Luftdruck ($p_{16}$) und einen reservoirseitigen Luftdruck ($p_{15}$) als Variablen hat, umfasst ist.

2. Verfahren nach Anspruch 1, **dadurch gekennzeichnet, dass** die Eichfunktion darstellbar ist als die Summe des reservoirseitigen oder des reifenseitigen Luftdrucks ($p_{15}$, $p_{16}$) und eines von der Differenz ($p_{15}$-$p_{16}$) zwischen reservoirseitigem und reifenseitigem Luftdruck abhängigen Korrekturterms.

3. Verfahren nach Anspruch 1 oder 2, **dadurch gekennzeichnet, dass** der reservoirseitige Druck ($p_{15}$) an einem zweiten Messpunkt (15) gemessen wird, und dass die Messpunkte (15, 16) beiderseits einer Drosselstelle (12) der Leitung (7) angeordnet sind.

4. Verfahren nach Anspruch 2, **dadurch gekennzeichnet, dass** die Druckdifferenz ($p_{15}$-$p_{16}$) mit einem Exponenten < 1 oder mit einem Exponenten > 1 in den Korrekturterm eingeht.

5. Verfahren nach Anspruch 4, **dadurch gekennzeichnet, dass** der Exponent kleiner als 0,9 ist.

6. Verfahren nach Anspruch 4 oder 5, **dadurch gekennzeichnet, dass** der Exponent größer als 0,5 ist.

7. Verfahren nach Anspruch 4, **dadurch gekennzeichnet, dass** der Exponent größer als 1,1 ist.

8. Verfahren zur Reifendruckanpassung, mit den Schritten:

   A) Erfassen des Drucks ($p_{rad}$) in einem Reifen (9) mit dem Verfahren nach einem der vorhergehenden Ansprüche,
   B) Schließen der den Reifen (9) mit dem Druckreservoir (4) verbindenden Leitung (7), wenn der erfasste Druck mit einem Zieldruck übereinstimmt.

9. Verfahren nach Anspruch 8, **dadurch gekennzeichnet, dass** der Zieldruck vom Druck des Druckreservoirs (4) verschieden ist.

10. Verfahren nach Anspruch 8 oder 9, **dadurch gekennzeichnet, dass** es an einem ersten (9) und einem zweiten Reifen eines Fahrzeugs durchgeführt wird, wobei die Zieldrücke für beide Reifen verschieden sind.

**Claims**

1. A method of detecting the pressure in a pneumatic tyre comprising the steps:

   a) causing air to flow on a line (7) connecting the pneumatic tyre (9) to a pressure reservoir (4), and
   b) measuring a tyre-side air pressure ($p_{16}$) at a tyre-side measurement point (16) of the line (7), which is respectively separated from the reservoir (4) and from the tyre (9) by a flow resistance, **characterised in that** the further method step is included:
   c) estimating the tyre pressure ($p_{rad}$) on the basis of a calibration function which has the tyre-side air pressure ($p_{16}$) and a reservoir-side air pressure ($p_{15}$) as variables.

2. A method according to claim 1 **characterised in that** the calibration function can be represented as the total of the reservoir-side or the tyre-side air pressure ($p_{15}$, $p_{16}$) and a correction term dependent on the difference ($p_{16}$-$p_{16}$) between the reservoir-side and the tyre-side air pressures.

3. A method according to claim 1 or claim 2 **characterised in that** the reservoir-side pressure ($p_{15}$) is measured at a second measurement point (15) and that the measurement points (15, 16) are arranged on both sides of a throttle location (12) of the line (7).

4. A method according to claim 2 **characterised in that**

the pressure difference ($p_{15}$-$p_{16}$) goes into the correction term with an exponent <1 or with an exponent >1.

5. A method according to claim 4 **characterised in that** the exponent is less than 0.9.

6. A method according to claim 4 or claim 5 **characterised in that** the exponent is greater than 0.5.

7. A method according to claim 4 **characterised in that** the exponent is greater than 1.1.

8. A method of tyre pressure adjustment comprising the steps:

    A) detecting the pressure ($p_{rad}$) in a tyre (9) with the method according to one of the preceding claims, and
    B) closing the line (7) connecting the tyre (9) to the pressure reservoir (4) when the detected pressure is the same as a target pressure.

9. A method according to claim 8 **characterised in that** the target pressure is different from the pressure of the pressure reservoir (4).

10. A method according to claim 8 or claim 9 **characterised in that** it is carried out on a first (9) or a second tyre of a vehicle, wherein the target pressures for the two tyres are different.

**Revendications**

1. Procédé pour détecter la pression dans un pneumatique, comprenant les étapes de :

    a) envoi d'air dans une conduite (7) qui relie le pneumatique (9) à un réservoir de pression (4),
    b) mesure d'une pression d'air côté pneumatique ($p_{16}$) en un point de mesure côté pneumatique (16) de la conduite (7), lequel est séparé du réservoir (4) et du pneumatique (9) concerné par une résistance à l'écoulement, **caractérisé en ce que** l'étape de procédé supplémentaire
    c) estimation de la pression de pneumatique ($p_{rad}$) à l'aide d'une fonction d'étalonnage qui a pour variables la pression d'air côté pneumatique ($p_{16}$) et une pression d'air côté réservoir ($p_{15}$),
    est incluse.

2. Procédé selon la revendication 1, **caractérisé en ce que** la fonction d'étalonnage est représentable en tant que somme de la pression d'air côté réservoir ou de la pression d'air côté pneumatique ($p_{15}$, $p_{16}$) et d'un terme correctif dépendant de la différence ($p_{15}$-$p_{16}$) entre la pression d'air côté réservoir et la pression d'air côté pneumatique.

3. Procédé selon la revendication 1 ou 2, **caractérisé en ce que** la pression côté réservoir ($p_{15}$) est mesurée en un second point de mesure (15), et **en ce que** les points de mesure (15, 16) sont disposés de part et d'autre d'un point de restriction (12) de la conduite (7).

4. Dispositif selon la revendication 2, **caractérisé en ce que** la différence de pression ($p_{15}$-$p_{16}$) intervient dans le terme correctif avec un exposant < 1 ou avec un exposant > 1.

5. Procédé selon la revendication 4, **caractérisé en ce que** l'exposant est inférieur à 0,9.

6. Procédé selon la revendication 4 ou 5, **caractérisé en ce que** l'exposant est supérieur à 0,5.

7. Procédé selon la revendication 4, **caractérisé en ce que** l'exposant est supérieur à 1,1.

8. Procédé d'adaptation de pression de pneumatique, comprenant les étapes de :

    A) détection de la pression ($p_{rad}$) dans un pneumatique (9) avec le procédé selon une des revendications précédentes,
    B) fermeture de la conduite (7) reliant le pneumatique (9) au réservoir de pression (4) lorsque la pression détectée coïncide avec une pression visée.

9. Procédé selon la revendication 8, **caractérisé en ce que** la pression visée est différente de la pression du réservoir de pression (4).

10. Dispositif selon la revendication 8 ou 9, **caractérisé en ce qu'**il est réalisé sur un premier (9) et un second pneumatique d'un véhicule, les pressions visées étant différentes pour les deux pneumatiques.

**Fig. 1**

# Fig. 2

Legend:
- Errechneter Reifendruck
- Tatsächlicher Reifendruck
- Druck Drossel/Reifen
- Druck Drossel/Auslass

Labels: CC, CR, C16', C15'

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009051403 A1

- EP 0365953 A2